Europäisches Patentamt

**(19)** European Patent Office

Office européen des brevets

**(11)** Publication number: **0 019 368**

**A1**

**(12)** EUROPEAN PATENT APPLICATION

**(21)** Application number: **80301272.3**

**(22)** Date of filing: **18.04.80**

**(51)** Int. Cl.³: **C 08 G 18/10**
C 08 G 18/75, C 08 G 18/48
C 03 C 17/32

**(30)** Priority: **17.05.79 JP 59761/79**

**(43)** Date of publication of application:
**26.11.80 Bulletin 80/24**

**(84)** Designated Contracting States:
**DE FR GB**

**(71)** Applicant: **MITSUI-NISSO CORPORATION**
8-21 Toranomon 3-chome Minato-ku
Tokyo 105(JP)

**(72)** Inventor: **Takashi, Saito**
2-31 Mitsui Toatsu Apartment 2882 Iijima-cho
Totsuka-ku Yokohama-shi Kanagawa-ken(JP)

**(72)** Inventor: **Kiyotsugu, Asai**
4-1-28, Hase, Kamakura-shi
Kanagawa-ken Mitsui-Toatsu Hase-Ryo(JP)

**(72)** Inventor: **Toshihiko, Kawabata**
2214-1 Kugenuma
Fujisawa-shi Kanagawa-ken(JP)

**(74)** Representative: **Harrison, David Christopher et al,**
**MEWBURN ELLIS & CO 70 & 72 Chancery Lane**
**London WC2A 1AD(GB)**

**(54)** A thermosetting polyurethane resin coating agent.

**(57)** A thermosetting one-pack polyurethane resin coating agent comprising a thermosetting polyurethane resin (which may be in the form of an aqueous dispersion substantially free of non aqueous solvent) and which exhibits resistance to clouding and damage when used as coating agent for bottles or containers made from glass or other inorganic material which are subjected to sterilization by hot water.

The resin contains from 10 to 40% by weight, relative to the non-volatile matter of the resin, of polyoxyalkylene glycol of which 1 to 8% by weight relative to the non-volatile components of the resin is either poloyoxethylene glycol, or polyoxyethylene- polyoxypropylene glycol, or a mixture thereof, The resin also contains diisocyanate (in the form of a mixture of methylene-bis (4-cyclohexylisocyanate) and isophorone diisocyanate) in a molar ratio of from 1:0.3 to 1:1.5, a monofunctional isocyanate blocking agent, a chain elongating agent and a crosslinking agent.

1.

# A THERMOSETTING POLYURETHANE RESIN COATING AGENT

This invention relates to a thermosetting polyurethane resin coating agent comprising an aqueous dispersion of a thermosetting polyurethane resin. The invention particularly relates to a one pack type thermosetting polyurethane resin with excellent mechanical strength, visual appearance, and water resistance such that it can be used as a surface-protective coating for glass beverage bottles which require sterilization with hot water.

Two-pack thermosetting polyurethane resins with a high resistance to hot water are known (such as Desmodur/Desmophen manufactured by Bayer A.G. or that manufactured by Auld Co.Ltd.). However these systems are limited in their application as a result of their two-pack nature.

One-pack thermosetting polyurethane resins and their aqueous dispersions are also known in which blocked isocyanate radicals are employed (Examined Japanese Patent Publications: No.5989/1964, No.11558/1978 (GBPS 1501769), No.47519/1977 and unexamined Japanese Patent Publication No.105599/1978 (DTOS 2707659)). However, no coating agents for glass bottles have hitherto been found which have had a high enough resistance to hot water to enable bottles coated with them to be sterilized using hot water.

As a result of extensive research aimed to overcome the disadvantage described above, the inventors have found a one pack type thermosetting polyurethane resin with a sufficiently high resistance to hot water (in the form of retention of mechanical strength and maintenance of transparency) to make it possible to use hot water to sterilize bottles coated with the resin. It has also been found possible to obtain an aqueous dispersion of a thermosetting polyurethane resin with the properties described above in a form substantially free of non-aqueous solvent.

The present invention comprises a one pack type coating agent for bottles, containers or other objects made of glass or other inorganic material, wherein the coating material comprises an aqueous dispersion of a thermosetting polyurethane resin. The resin used contains 10 to 40% by weight (% by weight is hereinafter referred to as %) of polyoxyalkylene polyols relative to the non-volatile components of the thermosetting polyurethane resin. Of the polyoxyalkylene polyols 1 to 8% relative to the non-volatile matter of the thermosetting polyurethane resin are either polyoxyethylene glycol or polyoxyethylene-polyoxypropylene glycol, or a mixture thereof. The resin also contains a monofunctional isocyanate-blocking agent which is selected from the group consisting of phenols, lactams, oximes, imides and alcohols. The resin also contains a chain elongating agent which is selected from the group consisting of glycols, amines, and aminoalcohols; a cross linking agent which is selected from the group consisting of alcohols, aminoalcohols and an isocyanate ingredient which is a mixture of methylene-bis (4-cyclohexylisocyanate) and iso-phorone diisocyanate in a molar ratio in the range of from 1:0.3 to 1:1.5. A thermosetting polyurethane resin produced from polyoxyalkylene polyols, and isocyanate ingredient, a monofunctional isocyanate-blocking agent, a chain elongating agent and a cross-linking agent, is very useful as a one pack type coating agent. It provides a

0019368

3.

coating with excellent mechanical strength, visual appearance and water resistance even after treatment with hot water and is thus ideal for use as a surface protective coating agent for glass beverage bottles which require sterilization with hot water.

The present invention thus includes the following aspects.

(1) A thermosetting polyurethane resin containing 10 to 40% by weight of Polyoxyalkylene polyols relative to the non-volatile components of the thermosetting polyurethane resin where of the polyalkylene polyols, 1 to 8% relative to the non-volatile matter of the thermosetting polyurethane resin are either polyoxethylene glycol or polyoxyethylene-polyoxypropylene glycol, or a mixture thereof, and where the resin also contains an isocyanates ingredient (in the form of a mixture including methylene-bis (4-cyclohexylisocyanate) and iso-phorone diisocyanate in a molar ratio of from 1:0.3 to 1:1.5), a monofunctional isocyanate-blocking agent, a chain elongating agent and a cross linking agent.

(2) An aqueous dispersion of the thermosetting polyurethane resin described above which can be made substantially free of non aqueous solvent.

(3) A coating agent for bottles, containers or other objects which are constructed from glass or some other inorganic material and which comprises a thermosetting polyurethane resin as described above.

(4) A coating agent for bottles, containers or other objects which are constructed from glass or other inorganic material and which comprises an aqueous

4.

dispersion of a thermosetting polyurethane resin as described above which can be made substantially free of non aqueous solvent.

The polyoxalkylene polyols used are in the form of polyether diols some examples of which are polyoxyethylene glycol, polyoxypropylene glycol, polyoxytytetramethylene glycol, copolymerized glycols such as polyoxyethylene-polyoxypropylene glycol, polyoxypropylene-polyoxytetramethylene glycol and similar compounds, a terpolymerized glycol of propylene oxide, ethylene oxide, tetrahydrofuran and the like. It is also possible for a mixture of the polyether diols described above to be used. The polyoxyethylene polyols used should preferably be bifunctional, but trifunctional ones or mixtures of them can be used. For example, those obtained by adding one or more alkylene oxides to glycerine to give trimethylol propane, trimethylol ethane, 1, 2, 6-hexane triol or other similar compounds.

The polyoxyethylene glycol or other nonionic surface active agent component used should include, polyoxyethylene glycols with terminal hydroxyl groups having molecular weights in the ranges of from 400 to 20,000 and preferably from 5,000 to 10,000, propylene oxide and ethylene oxide copolymers having a molecular weight in the range of from 1,000 to 20,000 and preferably block copolymers of polyoxypropylene glycol with ethylene oxide. The amount of these to be used is in the range of from 1 to 8% relative to the non-volatile matter of (c). An amount less than 1% will lower the self-emulsifiability and an amount in excess of 8% will cause a decrease in the hot water resistance of the resin.

5.

The amount of polyoxyalkylene polyol used is in the range of from 10 to 40% relative to the non-volatile matter of thermosetting polyurethane resin (c). The lower this amount is the more rigid the coated film will become, and the better its slip properties will be. However if an amount less than 10% is used the transparency and resistance to hot water of the coating will deteriorate and if an amount exceeding 40% is used the coated film will become disadvantageously flexible.

The isocyanate ingredient used is a mixture of methylene-bis (4-cyclohexyl isocyanate) and iso-phorone diisocyanate.

The methylene bis (4-cyclohexylisocyanate) used is a mixture of its stereoisomers (Hylene W, Hylene Ws, etc. supplied by E.I. Du Pont de Nemours & Co.).

The ratio of moles of iso-phorone diisocyanate used per one mole of methylene bis (4-cyclohexylisocyanate) is from 0.3 to 1.5. With an amount less than 0.3 mole, the transparency of the coating is decreased and with an amount exceeding 1.5 moles the heat resistance of the coating deteriorates for example, the coating becomes more susceptible to softening and sticking on heating.

The chain-elongating agent used in the present invention may be chosen from the chain-elongating agents used for the preparation of polyurethane elastomers, for example glycols, aminoalcohols, diamines and the like. These may be used singly or may be mixed. The glycols which may be used include ethylene glycol, 1,2-propylene glycol, 1,3-propylene glycol, 1,3-butylene glycol, 1,4-butylene glycol, 1,6-hexane diol, diethylene glycol, dipropylene glycol and the like.

6.

The aminoalcohols which may be used include monoethanolamine, monoisopropanolamine and the like.

The diamines which may be used include ethylene diamine, butylene diamine, isophorone diamine, 4,4'-diamino-diphenyl methane, 3,3'-dichlo-4,4'-diamino-diphenyl methane, N-$\beta$-(aminoethyl)-$\gamma$-aminopropyl-trimethoxysilane and the like.

The amount of chain elongating agent used is such that the ratio of NCO groups in the above isocyanate ingredient to active hydrogen groups in the polyoxyalkylene polyol and the chain elongating agent is greater than 1 (one), and is usually such that no unreacted isocyanate ingredient is present after the reaction of the polyoxyalkylene polyols with the isocyanate ingredient and the chain elongating agent. The $\frac{NCO}{H}$ (mole ratio) is suitably in the range 1 to 2.

The monofunctional iscoyanate-blocking agent used may include phenols such as phenol, o-cresol, xylenol, nonylphenol and the like, lactams such as $\gamma$-butyrolactam, $\epsilon$-caprolactam and the like; oximes such as acetoxime, methylethyl-ketoxime, methylisobutyl-ketoxime, cyclohexanone-oxime, benzophenone-ketoxime and the like; imides such as succinic imide, phthalic imide and the like; malonic esters, acetoacetic esters, or alcohols such as butanol, isopropanol, t-butanol and the like.

The amount of blocking agent used is such as to subject some of the free NCO groups present in the reaction mixture, formed by the reaction of polyxyalkylene polyols with the isocyanate ingredient and the chain-elongating agent, to blocking.

The crosslinking agent used may include polyfunctional alcohols, aminoalcohols, amines or the like.

Examples of crosslinking agents which may be used are trimethylol propane, pentaerythritol, glycerin, an adduct of trimethylol propane with propylene oxide having an OH-value above 450, an adduct of glycerin with propylene oxide having an OH-value above 450, diethanolamine, triethanolamine, triisopropanolamine, diisopropanolamine, and adduct of 1 mole of ethylenediamine and 4 moles or less of propylene oxide, or diethylene-triamine, triethylene-tetramine and the like.

The amount of crosslinking agent used is in the range of from 1.2 to 4 equivalent of the free isocyanate groups left after the reaction with the blocking agent.

The resin of the present invention has the following advantages.

(1) It may be used as a protective coating agent for vessels such as glass vessels where transparency and appearance are of great importance, as it provides a film with excellent mechanical strength and appearance.

(2) It is especially useful as a protective coating agent for glass beverage bottles which require sterilization with hot water. The coated film according to the present invention substantially retains its mechanical strength and complete transparency even after the bottle is sterilized by treatment with hot water at about 90°C in a pasteurizing process.

(3) It prevents glass fragments from being scattered in the event of the glass which it is coating

8.

being broken.

(4)   It can prevent breaking or scratch marks in glass or other inorganic matter.

(5)   If required, a colouring agent can be incorporated in the resin to form a coloured coating agent.

(6)   The coating can be dried and cured by a conventional hot air oven heating system, and can be applied as an aqueous dispersion substantially free of non aqueous solvent.   This gives it the advantages over water-dispersed systems which include non aqueous solvent of reduced inflammability and toxicity.

(7)   It is self-emulsifying and thus avoids the disadvantages of an emulsifier-containing system.

(8)   The resin according to this invention may be used as a paint (colourless or coloured), adhesive, modifier or the like; in the form of a solution, water-dispersion, powder or the like.

A brief general description of the production of a thermosetting polyurethane resin within the present invention will now be given.

Polyoxalkylene glycol is reacted with an excess of diisocyanate at a temperature in the range of from 50 to 90°C for 1 to 3 hours.   It is then further reacted with a chain-elongating agent for 1 to 3 hours at a temperature ranging from room temperature to 80°C.   A further reaction is then carried out for between 5 to 30 minutes at a temperature in the range of from 50 to 80°C by adding a monofunctional isocyanate blocking agent to the resulting prepolymer with terminal NCO groups. A crosslinking agent is subsequently added at a temperature ranging from room temperature to 70°C and is reacted with the remaining NCO groups at a temperature in the range of from 50 to 70°C for 1 to 2 hours so as to obtain the thermosetting polyurethane resin of the present invention. The conditions shown above are solely examples and the conditions for the production of the resins are not limited to these particular conditions.

The solvent for the reaction may be selected according to its use. The reaction mixture is usually dissolved uniformly enough for polymerization by using a ketone solvent such as acetone, methylethylketone or the like.

A catalyst may be used for the reaction, if necessary, and known catalysts such as those used in the preparation of urethane may be used. For example; tin catalysts such as dibutyltin dilaurate, amine catalysts such as triethylene-diamine, or the like may be used.

In order to obtain an aqueous dispersion, of the above resin solution an amount of water ranging from 0.2 to 4 times the amount of resin by weight is added whilst stirring at room temperature so as to form an emulsion. The non-aqueous solvent is then distilled off by conventional means so as to obtain an aqueous dispersion of the thermosetting polyurethane resin which is substantially free of non aqueous solvent.

The following examples are given in order to illustrate the invention.

Example 1

A reactor with a stirrer and a reflux condenser

10.

was purged with nitrogen gas, and 90 parts by weight (hereinafter parts by weight are referred to as parts) of a polyoxypropylene glycol having a molecular weight of 2000 (hereinafter referred to as PPG 2000), 237.5 parts of methylene bis (4-cyclohexyl isocyanate) (Hylene W produced by E.I. Du Pont de Nemours & Co.), 99.2 parts of isophoronediisocyanate (hereinafter referred to as IPDI) and 0.18 parts of dibutyltin dilaurate (hereinafter referred to as DBTDL) were placed in the reactor and reacted at 70°C for 1 hour. 80 parts of acetone were then added. 121.7 parts of dipropylene glycol (hereinafter referred to as DPG) were then added dropwise at 30 to 60°C to the resultant mixture whilst removing the heat of reaction so as to effect the reaction at 70°C for 1.5 hours. Thereafter, 21.8 parts of methylethylketoxime were added to the reaction mass which was then maintained at 70°C for 10 minutes, and 18 parts of a nonionic emulsifier (polyoyethylene-polyoxypropylene glycol, having a molecular weight of about 14000, obtained by the addition reaction of polyoxypropylene glycol having a molecular weight of 2000 with ethylene oxide, hereinafter referred to as N-1) were then added to and allowed to react at 70°C for 1 hour.

Thereafter 90 parts of acetone were added. This was followed by the addition of 37.3 parts of triethanolamine (hereinafter referred to as TEA) at 40°C and by reaction at 60°C for 1.5 hours. 300 parts of acetone were then added to form a homogenous solution, and the resultant solution cooled at room temperature and removed from the reactor to give about 1090 parts of resin solution (hereinafter referrd to as S-1) which contained about 55% of nonvolatile matter and had a viscosity (measured by a B-type rotation viscometer) of 3500 cps at 31°C. Using an applicator a glass plate was coated uniformly with S-1 such that the film thickness was in the range of from 100 to 150 $\mu$ when dried. The coated film was dried at about 30°C for 30 minutes using a hot air dryer, and further cured at 150°C for 30 minutes.

The properties of the film of S-1 are shown in Table 1.

100 parts of "S-1"· were charged into a homogenizer and about 60 parts of water added dropwise whilst the mixture was stirred for about 3 hours at a high speed of about 2000 rpm so as to obtain an acetone containing aqueous dispersion of the resin. The dispersion was then transferred to a device in which stirring under vacuum was possible, and the acetone distilled off as the vaccum was gradually increased whilst stirring and maintaining the temperature of the dispersion at approximately room temperature. Finally after 3 hours at a temperature of 25°C and a pressure of from 30 to 40 mm Hg about 112 parts of an aqueous dispersion of resin (hereinafter referred to as E-1) were obtained having an acetone content of 0.5%, a non-volatile matter content of 49% and a viscosity of 60 cps at 30°C.

A film was formed by subjecting the dispersion to film formation similar to S-1 but with drying conditions of about 90°C for 30 minutes. The properties thereof are shown in Table 1.

Example 2

The same procedure was used as in Example 1 but with 97.5 parts of "PPG 2000", 207.7 parts of Hylene W, 173.1 parts of "IPDI", 0.2 parts of DBTDL, 115.5 parts of diethylene glycol (hereinafter referred to as DEG). 19.5 parts of "N-1", 23.6 parts of methylethylketoxime and 40.4 parts of TEA and 510 parts of acetone. About 1180 parts of a resin solution S-2 (hereinafter referred to as S-2) were obtained, which had a non-volatile matter content of 55% and a viscosity of 5,500 cps at 30ºC.

According to the same procedure as was used in Example 1 but using "S-2", an aqueous dispersion (hereinafter referred to as E-2) was obtained, which has an acetone content of 0.3%, a non-volatile matter content of 49% and a viscosity of 80 cps at 30ºC. The film properties from S-2 and E-2 are shown in Table 1.

Example 3

The same procedure was used as in Example 1 but with 135.2 parts of "PPG 2000", 194.6 parts of Hylene W, 161.7 parts of "IPDI", 102.7 parts of DEG, 23.6 parts of methylethylketoxime, 19.5 parts of "N11", 40.4 parts of TEA, 0.2 parts of DBTDL and 510 of acetone. About 1180 parts of a resin solution (hereinafter referred to as S-3) were obtained, which has a non-volatile matter content of 55% and a viscosity of 1000 cps at 30ºC.

According to the same procedure as was used in Example 1 but using resin solution "S-3", an aqueous dispersion (hereinafter referred to as E-3) was obtained, which has an acetone content of 0.3%, a non-volatile matter content of 49% and a viscosity of 30 cps at 30ºC. The film properties from "S-3" and "E-3" are shown in Table 1.

Reference Example 1

The same procedure was used as in Example 1 but using 90 parts of "PPG 2000", 342.6 parts of Hylene W, 115.8 parts of DPG. 21.8 parts of methylethyl-ketone, 18 parts of "N11", 37.3 parts of TEA, 0.18 parts of DBTDL and 480 parts of acetone. About 1080 parts of a resin solution (hereinafter referred to as SR-1) were obtained, which has a non-volatile matter content of 55% and a viscosity of 3,000 cps at 30°C.

According to the same procedure as was used in Example 1 but using "SR-1", an aqueous dispersion of the resin (hereinafter referred to as ER-1) was obtained, which had an acetone content of 0.4%, a non-volatile matter content of 49% and a viscosity of 50 cps at 3o 0oC.

The film properties from these "SR-1" and "ER-1" are shown in Table 1.

Table 1

| Example | 1 | | 2 | | 3 | | Reference Example 1 | |
|---|---|---|---|---|---|---|---|---|
| Polyoxyalkylene glycol (A) (%) * | 18 | | 18 | | 24 | | 18 | |
| Nonionic emulsifier (%) * | 3 | | 3 | | 3 | | 3 | |
| Hylene W/IPDI (molar ratio) | 1/0.49 | | 1/0.98 | | .1/0.98 | | 1/0 | |
| Chain-elongating agent | DPG | | DEG | | DEG | | DPG | |
| Film properties          Sample | S-1 | E-1 | S-2 | E-2 | S-3 | E-3 | SR-1 | ER-1 |
| Transparency (1) | ac-cepted | ← | ← | ← | ← | ← | ← | ← |
| Pencil hardness | HB | HB | HB | HB | B | B | HB | HB |
| After hot water resistance test (2) — Transparency (1) | ac-cepted | ← | ← | ← | ← | ← | re-jected | ← |
| After hot water resistance test (2) — Other unfavorable phenomena | none | ← | ← | ← | ← | ← | ← | ← |
| Tensile strength (kg/cm²) | 620 | ← | 590 | ← | 360 | ← | 600 | ← |
| Elongation (%) | 30 | ← | 70 | ← | 230 | ← | 30 | ← |
| Durability (3) | O | O | O | O | O | O | O | O |
| Resistance to alkalis (4) | O | O | O | O | O | O | O | O |

Notes on Table 1

\* : % by weight relative to the non-volatile matter of the resin solution.

(1) Transparency: "accepted" is for films having a transparency equal to or higher than that of a glass plate as observed by the naked eye and "rejected" is for those having a visible haze.

(2) Hot water resistance: The film test piece was immersed in hot water at 85°C for 2 hours and immediately thereafter cooled with cold water and observed with the naked eye. The transparency was determined by the method shown in (1) above. Examination was also made for the presence of unfavourable phenomena resulting from the hot water treatment such as shrinkage, stickiness or other phenomena. Method of coating bottles: 500 ml size glass bottles for Coca Cola drinks were dipped into a solution or a water dispersion, while being rotated at about 10 r.p.m., and were then dried with hot air at a temperature in the range of from about 40 to 80°C to such an extent that a substantial part of the solution or water was volatilized. This was followed by curing at 150°C for 1 hour. Transparent coated bottles were thus obtained.

(3) Durability: The durability was determined by passing coated bottles 20 times through the washing step of a Coca Cola drink bottling line for home-size bottles, and by measuring the resultant degree of damage to the bottles as shown by the incidence of scratch marks caused by the bottling line.

16.

0---The ratio of the number of bottles having at least one scratch mark with a length above 5 mm to the number of all tested bottles is less than or equal to 10%.

(4) Resistance to alkalis: This was determined by examining the appearance of coated bottles immediately after immersing them in an aqueous solution of 3.5% NaOH at 65°C for 2 hours.

0--- no change was recognized.

(5)⟵ refer to entry in adjacent left-hand column.

17.

CLAIMS

1.    A one-pack thermosetting polyurethane resin comprising polyhydroxy compounds, isocyanate group containing compounds, a monofunctional isocyanate blocking agent and a crosslinking agent; characterized in that the resin contains 10 to 40% by weight relative to the non-volatile components of the resin of polyoxyalkylene glycols of which 1 to 8% by weight relative to the non-volatile components of the resin is either polyoxyethylene glycol or polyoxyethylene-polyoxypropylene glycol, or a mixture thereof, and also contains an isocyanate ingredient in the form of a mixture of methylene-bis(4-cyclohexylisocyanate) and iso-phorone diisocyanate in a molar ratio of from 1:0.3 to 1:1.5.

2.    A coating agent for bottles, containers or other objects made of glass or other inorganic material characterized in that the coating agent comprises a thermosetting polyurethane resin containing 10 to 40% by weight relative to the non-volatile components of the resin of polyoxyalkylene glycols of which 1 to 8% by weight relative to the non-volatile components of the resin is either polyoxyethylene glycol or polyoxyethylene-polyoxypropylene glycol, or a mixture thereof, and also contains an isocyanate ingredient in the form of a mixture of methylene-bis(4-cyclohexylisocyanate) and iso-phorone diisocyanate in a molar ratio of from 1:0.3 to 1:1.5.

3.    A thermosetting polyurethane resin according to claim 1 or claim 2 wherein the thermosetting polyurethane resin is present as an aqueous dispersion.

4.      A thermosetting polyurethane resin or coating agent according to claim 3 wherein the dispersion is substantially free of non-aqueous solvent.

5.      A thermosetting polyurethane resin or coating agent according to any one of the preceding claims wherein the polyoxyethylene glycol or other nonionic surface active agent component used comprises polyoxyethylene glycols having molecular weights in the range of from 400 to 20,000 or propylene oxide and ethylene oxide copolymers having a molecular weight in the range of from 1000 to 20,000.

6.      A thermosetting polyurethane resin or coating agent accordng to Claim 5 wherein the polyoxyethylene glycols preferably have molecular weights in the range of from 5,000 to 10,000 and the copolymers of propylene oxide and ethylene oxide are preferably block copolymers.

7.      A thermosetting polyurethane resin or coating agent according to any one of the preceding claims wherein the amount of chain elongating agent used is such that the ratio of NCO groups in the isocyanate ingredient to active hydrogen groups in the polyoxyalkylene polyol and the chain elongating agent is preferably in the range 1 to 2.

8.      A thermosetting polyurethane resin or coating agent according to any one of the preceding claims wherein the amount of crosslinking is in the range of from 1.2 to 4 equivalents of the free isocyanate groups left after their reaction with the blocking agent.

0019368

# EUROPEAN SEARCH REPORT

**European Patent Office**

Application number

EP 80 30 1272

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| | <u>DE - A - 2 651 798</u> (MITSUI TOATSU CHEM.) <br><br> * Pages 1 to 3; claims 1 to 3 and 5; page 8, paragraph 2; page 9, paragraph 2 to page 10, paragraph 1; page 10, paragraph 3; page 13, paragraph 2 to page 14, paragraph 1 * <br><br> -- | 1 to 8 | C 08 G 18/10<br>18/75<br>18/48<br>C 03 C 17/32 |
| A | <u>FR - A - 2 120 014</u> (DAINIPPON INK. CHEM.) <br><br> * Page 39, claims 1 to 8; page 5, lines 15-40; page 12, lines 6-20 * <br><br> -- | 1 | |
| A | <u>GB - A - 1 208 595</u> (TEXTRON) <br><br> * Page 9, claim 1, page 2, lines 17-27; page 3, lines 79-117 * <br><br> ---- | 1 | **TECHNICAL FIELDS SEARCHED (Int.Cl. 3)** <br><br> C 08 G 18/10<br>18/12<br>18/75<br>18/48<br>18/80<br>C 03 C 17/32<br>B 65 D 23/08 |
| | -- | | **CATEGORY OF CITED DOCUMENTS** <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons <br><br> &: member of the same patent family, corresponding document |

| | | | |
|---|---|---|---|
| X | The present search report has been drawn up for all claims | | |
| Place of search | Date of completion of the search | Examiner | |
| The Hague | 14.08.1980 | VAN PUYMBROECK | |

EPO Form 1503.1 06.78